Europäisches Patentamt

European Patent Office

Office européen des brevets

(19)

(11) **EP 1 186 675 A1**

(12) **EUROPEAN PATENT APPLICATION**

(43) Date of publication:
**13.03.2002 Bulletin 2002/11**

(51) Int Cl.[7]: **C21B 13/10**, C21B 13/00

(21) Application number: **01121452.5**

(22) Date of filing: **07.09.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **07.09.2000 JP 2000271885**

(71) Applicant: **DAIDO TOKUSHUKO KABUSHIKI KAISHA**
**Naka-ku Nagoya-shi Aichi-ken (JP)**

(72) Inventor: **Imaizumi, Tadashi**
**Atsuta-ku, Nagoya-shi, Aichi (JP)**

(74) Representative: **Schorr, Frank, Dr. et al**
**Diehl Glaeser Hiltl & Partner,**
**Augustenstrasse 46**
**80333 München (DE)**

(54) **Apparatus for controlling introduced air in metal oxide reducing furnace**

(57)     In an apparatus for controlling introduced air in a metal oxide reducing furnace, an introduced-air-flow-rate SA is determined by adding an adjusted value A given from an oxygen density controlling system to a required-air-reference-flow-rate RA demanded by the charging amount of pellets. The introduced-air-flow-rate is controlled where the required-air-reference-flow-rate RA is the feed forward value. Thus, if the charging amount of the pellet is varied, since the introduced-air-flow-rate SA is determined by the adjusted value A and the required-air-reference-flow-rate RA varied in response thereto, the control response can be quickened without decrease of the stability. Further, at the abnormality of the oxygen sensor, as the adjusted value A is controlled to be zero, the required-air-reference-flow-rate RA is decided of itself as the introduced-air-flow-rate SA.

*FIG. 5*

**Description**

BACKGROUND OF THE INVENTION

The present invention relates to an apparatus for controlling an air to be introduced into a reducing furnace for reducing metal oxides.

For example, as a metal oxide reducing furnace (called as "reducing furnace " hereafter) for reducing metal oxides as iron oxide, nickel oxide and the like as dusts by steel making and recovering a metal therefrom, such a reducing furnace applied with a method called as "INMETCO Process" is known which carries processed materials (pellet) pelletized by mixing metal oxides with reducing materials (hereinafter, called as "reductants") like coal, coke and others on a hearth moving in a furnace chamber, and heats them at high temperatures in a reducing atmosphere while transferring within the furnace chamber. For example, a moving typed hearth furnace described in JP-A-64-5233 designates it.

Incidentally, in the reducing furnace as mentioned, the heated processed materials are reduced into a metal. At the same time, an oxygen which is generated by the reduction reacts with the reductant to form a gas. In addition to this, when an organic binding agent (binder) for pelletizing is contained, it is decompressed to form a gas. When the processed materials are heated by a gas burner, since an air/fuel ratio is set to be less than 1 for providing a reducing atmosphere, a fuel gas not yet burnt also exists in the furnace chamber. The gas at high temperature generated otherwise surplus in the furnace chamber is exhausted externally out of an exhausting path (flue), but in the reducing furnace as above mentioned, a heat of the exhausted gas is recovered by a heat-exchanger during the exhausting process to heighten efficiency of energy utilization.

As the above mentioned gas then existing in the furnace of the reducing atmosphere is inflammable, if the gas is sent as it is into the exhausting path, cooled by the heat exchanger and a following cooling tower (which is disposed downstream thereof), and mixed with an invading air, it is probably exploded. In the above reducing furnace, therefore, the exhausting path is provided and connected to a heating zone installed at a place of starting the transfer of the processed materials in the furnace chamber. Further, the necessary and sufficient amount of an air that is enough to take the complete combustion of an inflammable gas is introduced into said heating zone. Accordingly, the inflammable gas is oxidized (burnt) prior to sending it to the exhausting path, while maintaining the reducing atmosphere in the interior of the furnace. The heating zone has consequently an oxidizing atmosphere, but as a reducing zone installed at a side of transferring termination keeps the reducing atmosphere, no obstacle occurs to the reduction of metal oxides.

However, in the prior art, the introduced air amount for oxidizing the inflammable gas while maintaining the atmosphere in the reducing zone was controlled by a feedback control. The feedback control was done in such a manner that a deviation between an oxygen density measured in the vicinity of the gas exhausting path within the furnace chamber and a set value to be set at around 2(%) would be zero. Generally, in the feedback control, if a gain is increased to make responsibility high, stability goes down. A high responsibility has not yet been therefore realized in the control of the introduced air in the reducing furnace requiring to stabilize the oxygen density as soon as possible for avoiding danger of explosion and increasing heat efficiency. Moreover, there has been a problem that- in case the measuring of the oxygen density is impossible or a measured value becomes abnormal owing to trouble, adjustment or maintenance of an oxygen densitometer, that is, at emergency of the oxygen densitometer, the amount of the introduced air cannot be controlled. Accordingly, the operation of the furnace must be stopped to avoid the danger of explosion. By the way, the exhaust gas out of the reducing furnace also contains oxides or chlorides of metals other than a purpose, and by these oxides and chlorides, a filter of the oxygen densitometer is easy to clog, and the adjustment or maintenance are so often required, and breakdown easily happens.

SUMMARY OF THE INVENTION

In view of the above mentioned circumstances, the invention has been provided, and it is an object of the invention to offer an apparatus of controlling an introduced air in the reducing furnace, which is excellent in the control stability and response, and enables to continuously operate even at abnormality of the oxygen densitometer.

The above-mentioned object can be achieved by, an apparatus for controlling an introduced air in a metal oxide reducing furnace. The metal oxide reducing furnace heats processed materials containing metal oxides and reducing materials under a reducing atmosphere while transferring from a starting position the processed materials in one direction within a furnace chamber, to thereby reduce metal oxides for obtaining a metal from the processed materials. The metal oxide reducing furnace introduces air into a predetermined position of the furnace chamber so as to cause a complete combustion of an inflammable gas staying in the furnace chamber, and then the metal oxide reducing furnace discharges the thus completely combusted gas from a gas discharging position in adjacent to the starting position. The metal oxide reducing furnace measures an oxygen density within the furnace chamber by use of an oxygen densitometer that is disposed in the vicinity of the gas discharging position. The metal oxide reducing furnace controls an introduced-air-flow-rate of air introduced into the predetermined position by use of an adjusted value that is calculated in accordance with deviation between the measured value of the oxygen density and an reference oxygen density.

Moreover, the controlling apparatus, according to the present invention, comprises:

> means for determining, in accordance with the amount of the processed materials that is charged into the furnace, a processed-materials-requesting-air-flow-rate that is requested to take a complete combustion of gas which is generated from the processed materials,
> abnormality judging means for judging abnormality of the oxygen densitometer,
> means for controlling the adjusted value to be at zero when the abnormality of the oxygen densitometer is judged by the abnormality judging means, and
> means for determining the introduced-air-flow-rate by adding the processed-materials-requesting-air-flow-rate and the adjusted value.

In the present invention, the amount of the air to be introduced into the metal oxide reducing furnace is determined by adding, (i) the adjusted value calculated in accordance with the deviation between the measured oxygen density and the reference value thereof, to (ii) the processed-materials-requesting-air-flow-rate. In other words, in the present invention, the amount of the air to be introduced into the metal oxide reducing furnace is determined under a consideration of a processed-materials-requesting-air-flow-rate to be increased or decreased in accordance with the adjusted value. Accordingly; the introduced-air-flow-rate can be controlled by taking processed-materials-requesting-air-flow-rate, as a feed forward value. Namely, in the case where the amount of the processed materials to be charged into the furnace is varied, the introduced-air-flow-rate is determined by the processed-materials-requesting-air-flow-rate varied correspondingly thereto and the adjusted value. The control response may be quickened without accompanying decrease of the stability in comparison with a case where the introduced-air-flow-rate is determined only with the amount of the feedback control using the value of measuring the oxygen density. Further, at the abnormality of the oxygen densitometer, since the adjusted value is controlled to be zero by an adjusted value control means, the processed-materials-requesting-air-flow-rate is determined as the introduced-air-flow-rate as it is.

The amount of the inflammable gas generated from the processed materials is fluctuated even if the charging amount is fixed. Namely, the processed-materials-requesting-air-flow-rate is not always an optimum value for the heat efficiency. However, a degree of the fluctuation stays within a range where a sufficiently high heat efficiency is obtained and a danger of explosion can be exactly avoided. Thus, even under a situation of no feedback control available, the air flow rate minimum necessary for the heat efficiency and the safety can be secured, so that the furnace can be continuously operated, not stopped, and the productivity is heightened.

In the above-mentioned controlling apparatus of the present invention, it is preferable to further comprise:

> means for determining, in accordance with flow rates of air and fuel gas that are supplied into the furnace chamber for heating the processed materials, a shortage-air-flow-rate insufficient with respect to the complete combustion of the fuel gas,
> wherein the introduced-air-flow-rate determining means determines the introduced-air-flow-rate by adding the processed-material-requesting-air-flow-rate, the shortage-air-flow-rate and the adjusted value.

In such manners, when the processed materials are heated in the furnace chamber by use of the gas burner, the shortage-air-flow-rate short/insufficient with respect to the complete combustion of a fuel gas is determined by the means of determining the shortage-air-flow-rate. In the determining the introduced-air-flow-rate determinging means, a value where the shortage-air-flow-rate is added to the processed-material-requesting-air-flow-rate and the adjusted value, is determined in the introduced-air-flow-rate. That is, the required-air-reference-flow-rate (= the processed-material-requesting-air-flow-rate + the shortage-air-flow-rate) is used, as a feed forward value. The shortage-air-flow-rate with respect to a theoretical air/fuel ratio of the air to be supplied into the furnace from the gas burner for the combustion of the fuel gas is considered when determining the required-air-reference-flow-rate and in turn the introduced-air-flow-rate. Therefore, a consumption of the air by the combustion of the fuel gas is compensated by increasing the air flow rate to be introduced into the predetermined position within the furnace chamber, so that the inflammable gas can be moreover exactly subjected to the complete combustion and exhausted.

In the above-mentioned controlling apparatus of the present invention, it is advantageous that the processed-materials-requesting-air-flow-rate determining means determines, as the processed-materials-requesting-airflow-rate, a value larger by a predetermined value than a value that is determined in correspondence to the amount of the processed materials that have been actually charged.

In such a manner, the processed-materials-requesting-air-flow-rate larger by a predetermined value than a value corresponding to the amount of the processed materials that have been actually charged is employed for determining the introduced-air-flow-rate amount. Accordingly, the oxygen density in the predetermined position within the furnace chamber is more heightened than a necessary value for the complete combustion of the gas generated from the processed materials, otherwise for the complete combustion of this generated gas and the remainder of the fuel gas. Therefore, also when the adjusted value is controlled to be zero by the means of controlling the adjusted value, the air flow rate is sufficiently secured for the complete combustion of the inflammable gas within the furnace chamber.

Further, in the above-mentioned controlling apparatus of the present invention, it is advantageous that the furnace chamber is formed into a doughnut shape, and the processed materials is laid on a doughnut shaped hearth and then rotated around the axis thereof so as to be transferred in a circumferential direction of the furnace chamber. With this structure, the reducing furnace can be structured on the rotating hearth without interruption. At the same time, since the whole of the hearth is located within the furnace for transferring the processed materials, there is no uselessness of installing a return path of the hearth in comparison with a case of using a longitudinal furnace chamber for linearly sending the processed materials. Further, a metal obtained by charging and reducing the processed materials can be advantageously recovered at an adjacent place.

Further, preferably the above mentioned abnormality judging means is for judging abnormalities of the oxygen densitometer by abnormalities of a gas analyzer, that is, of sampling gas flow rate, analyzing unit, power source and breakdown of signal lines.

Moreover, the above-mentioned object can be attained by an apparatus for controlling an introduced air in a metal oxide reducing furnace according to the present invention. The metal oxide reducing furnace comprises, a furnace chamber into which the processed material processed materials containing metal oxides and reducing materials are charged, a hearth disposed within the furnace chamber for transferring the processed materials within the furnace chamber, a heater disposed at the furnace for heating the processed materials, an air introducing member disposed at the furnace, a fuel gas introducing member disposed at the furnace, and an oxygen densitometer measuring an oxygen density within the furnace chamber. The controlling apparatus according to the present invention comprises:

means for determining, in accordance with the amount of the processed materials that are charged into the furnace chamber, a processed-materials-requesting-airflow-rate that is requested to take a complete combustion of gas which is generated from the processed materials; means for determining, an introduced-air-flow-rate of an air introduced by the air introducing member, by adding the processed-materials-requesting-air-flow-rate and an adjusted value that is calculated in accordance with deviation between the measured value of the oxygen density and an reference oxygen density; abnormality judging means for judging abnormality of the oxygen densitometer; and means for controlling the adjusted value to be at zero when the abnormality of the oxygen densitometer is judged by the abnormality judging means.

In the above-mentioned controlling apparatus according to the present invention, it is preferable to further comprises:

means for determining, in accordance with flow rates of the air and the fuel gas that are introduced into the furnace chamber, a shortage-air-flow-rate insufficient to take a complete combustion of the fuel gas, wherein the introduced-air-flow-rate determining means determines the introduced-air-flow-rate by adding the processed-materials-requesting-air-flow-rate, the shortage-air-flow-rate and the adjusted value.

Further, in the above-mentioned controlling apparatus according to the present invention, it is advantageous that the processed-materials-requesting-air-flow-rate determining means determines, as the processed-materials-requesting-air-flow-rate, a value larger by a predetermined value than a value that is determined in correspondence to the amount of the processed materials that have been actually charged.

BRIEF DESCRIPTION OF THE PREFERRED EMBODIMENTS

Fig. 1 shows the whole of a reducing furnace installed with an introduced air controlling apparatus of the invention;
Fig. 2 shows a horizontally plane view of the reducing furnace of Fig. 1;
Fig. 3 shows a view corresponding to the cross section viewed from III-III of Fig. 2;
Fig. 4 shows a view for explaining elementary parts of the introduced air controlling structure of the metal oxides reducing furnace of Fig. 1;
Fig. 5 shows a function block diagram for explaining the function of the controller of Fig. 4; and
Fig. 6 shows a view for explaining elementary parts of another controlling structure to be applied to the reducing furnace of Fig. 1.

DETAILED DESCRIPTION OF THE PREFERRED EMBODIMENTS

Now, explanation will be made in detail to one embodiment of the invention with reference to the attached drawings.

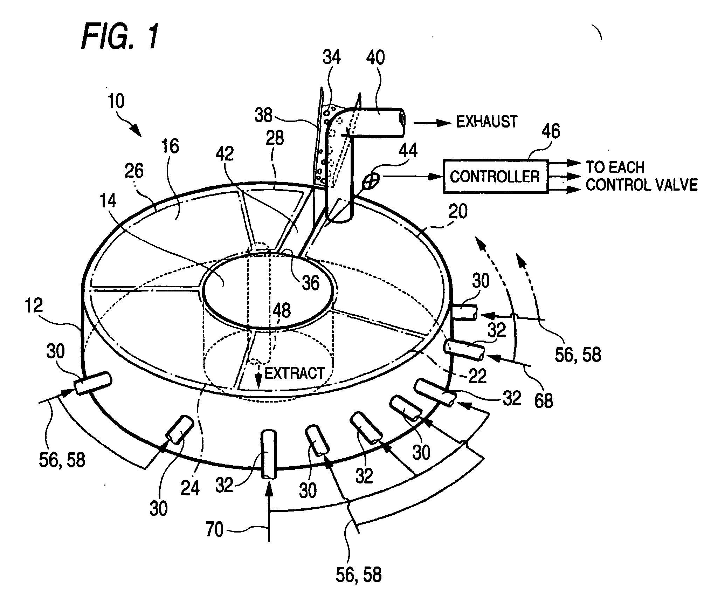

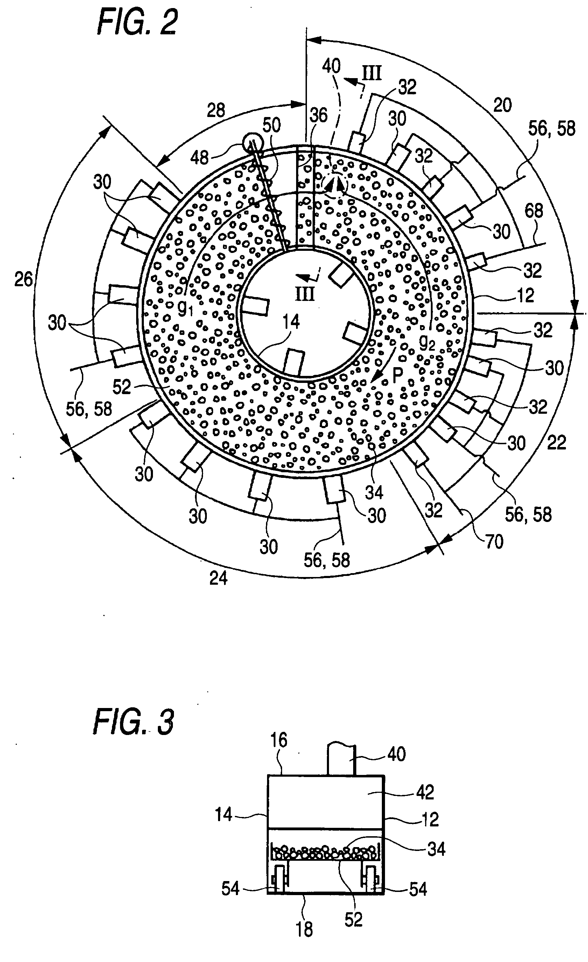

Fig. 1 shows the whole of a reducing furnace 10 installed with an introduced air controlling apparatus of the invention, Fig. 2 is a horizontally plane view of the reducing furnace 10, and Fig. 3 is the cross section viewed from III-III of Fig. 2. In Fig. 1, the reducing furnace 10 is doughnut-shaped of approximately uniform height (thickness), and at an upper and lower end positions between an outer peripheral wall 12 and an inner peripheral wall 14 which are coaxially arranged, there are provided a top wall 16 and a bottom wall 18, so that a doughnut shaped furnace chamber (heating space) is defined therebetween. As mentioned later, metal oxides charged into the furnace for recovering a metal from dusts by steel-making is reduced while being transferred in the doughnut-shaped furnace chamber. By the way, the peripheral walls 12, 14, the top wall 16 and the bottom wall 18 are all heat insulating walls.

The reducing furnace 10 is, as shown with one-dotted chain lines in Fig. 1, installed with five parts of a heating zone 20, intermediate zone 22, first reducing zone 24, second reducing zone 26 and extraction zone 28 which are sectioned, e.g., in a peripheral direction. Each of the zones except the extraction zone 28 has a plurality of burners 30 (two or four pieces in Fig. 2) in the outer peripheral wall 12 and the inner peripheral wall 14. Each burner 30 is connected with a fuel gas supply pipe 56 and an air supply pipe 58, and for heating temperature of an atmosphere in each zone to around predetermined 1100 to 1300 (°C), a mixed gas of the air and the fuel gas as COG (gas generated when carbonizing a coal in a coke oven) or LPG (liquefied petroleum gas) is jetted toward the furnace chamber. The fuel gas is burnt at a theoretical air/fuel ratio or more in the heating zone 20, sufficiently heated, and heightened till, e. g., 1100(°C) in a neutral or oxidizing furnace atmosphere. In the intermediate zone 22, the combustion is made at the theoretical air/fuel ratio (e.g., around 0.98 to 1.00) so as to heat the furnace temperature in a somewhat reducing atmosphere at the same as or slightly higher 1250(°C). Further, in the reducing zones 24, 26, the combustion is made at an enough lower mixing ratio (e.g., around 0.85 to 0.95) than the theoretical air/fuel ratio to provide an atmosphere temperature of around 1300(°C) by the reducing atmosphere in the furnace. At the extraction zone 28 without the burner 30, the atmosphere temperature is more or less lower as 1100(°C).

At the parts corresponding to the heating zone 20 and the intermediate zone 22 in the outer peripheral wall 12, one or a plurality of air inlets 32 (three pieces in Fig. 2) are provided to be positioned between the burners 30. The air inlet 32 is for sending the air into the furnace to complement oxygen for a complete oxidation of the fuel gas or a generated gas. The air inlets 32 are connected to pipelines 68, 70 of another system such that the air flow rates respectively sent into the heating zone 20 and the intermediate zone 22 are independently controlled.

The top wall 16 is for covering the furnace chamber at the upper side, and at the position between the heating zone 20 and the extraction zone 28, the top wall 16 is partially cut out in the peripheral direction to provide a charging mouth 36 for throwing pellets 34 of metal oxides as the processed materials. At the upper part of the charging mouth 36, a throwing part 38 of a charging apparatus is positioned for throwing the pellets 34 made by a pelletizer (not shown), from which the pellet 34 is thrown into the reducing furnace 10 at appropriate rate. The pellet 34 is formed into a desired shape of ball or particle having, for example, about 7 to 13 (mm) diameter in manner that dusts by steel-making and others are thrown into the pelletizer, and a reducing agent (carbon), organic binder and water are added. In the present embodiment, the pellet 34 is the processed materials.

At a place in the vicinity of the charging mouth 36 in the heating zone 20, a flue 40 stands from the top wall 16 for exhausting a gas generated in the furnace or a surplus air. The burners 30 and the air inlets 32 are installed at plural places of the furnace, while the flue 40 is installed at one place biasing to the extraction zone 28 in the heating zone 20, and therefore, the generated gas flows toward the flue 40 from both of the heating zone 20 and the extraction zone 28 as shown with arrows $g_1$, $g_2$ in Fig. 2. Between the extraction zone 28 and the charging mouth 36, a partitioning wall 42 is furnished directing downward from the top wall 16 between the peripheral walls 12, 14, so that the atmosphere in the heating zone 20 and the second reducing zone 26 is divided by the partitioning wall 42. An oxygen sensor (an oxygen density analyzer, that is, a gas analyzing apparatus) 44 is provided nearly the flue 40, and the oxygen density around the inlet of the flue 40, that is, the oxygen density in an exhausted gas flowing into the flue 40 is measured, and a density signal is sent to a controller 46 which is furnished with CPU, ROM, RAM and others for processing various measured values such as density signals being outputs from the oxygen sensor 44, temperatures or pressure in the furnace, and in accordance with the processed results, the gas flow rate or air flow rate are controlled.

A pellet discharging mouth 48 is provided for discharging the pellet 34 having accomplished the reduced treatment at the outer peripheral side of the furnace chamber nearly the charging mouth 36 in the extraction zone 28. As viewed in Fig. 2, a screw 50 is equipped at the upper part of the discharging mouth 48 extending along the diameter of the furnace, and the pellet 34 having reached the extraction zone 28 is sent to the outer peripheral side of the furnace chamber by means of the screw 50 rotated around the axis by a drive mechanism (not shown). The discharged pellet 34 is cooled under the reducing atmosphere for preventing re-oxidation and recovered, and as a facility and a mechanism therefor is not necessary for understanding the present embodiment, explanation is omitted.

Within the reducing furnace 10, as shown in Fig. 2, one doughnut shaped hearth 52 is provided which has width size slightly smaller than a mutual distance of the outer peripheral wall 12 and the inner peripheral wall 14. As seen in Fig. 3 showing a vertically cross section, the hearth 52 comprises an almost flat pellet laying part for laying the pellet 34 in thickness of 2 to 3 layers, a side wall part projecting from both ends having a small height in the width direction (the diameter direction in the furnace), and plural pairs of wheels 54 at both ends in the width direction of the bottom. The wheels 54 are furnished at a reasonable space in the circumferential direction of the furnace for supporting the hearth 52 in a predetermined height.

The hearth 52 is therefore structured rotatably around the axis extending vertically with respect to the attached drawing paper of Fig. 2 to rotate, e.g., clockwise direction shown with an arrow P by a drive mechanism (not shown). Namely, in the present embodiment, the reducing furnace 10 is composed to be a rotary hearth, the doughnut shaped hearth 52 of which is rotated peripherally in the doughnut shaped furnace. The pellet 34 charged from the charging mouth 36 is consecutively laid on the hearth 52 rotating, is passed, as being heated, in succession the heating zone 20, intermediate zone 22, first reducing zone 24 and second reducing zone 26, and in this course, the pellet is reduced into metal mainly in the reducing zones 24, 26, discharged from the discharging mouth 48 provided in the extraction zone 28, and collected.

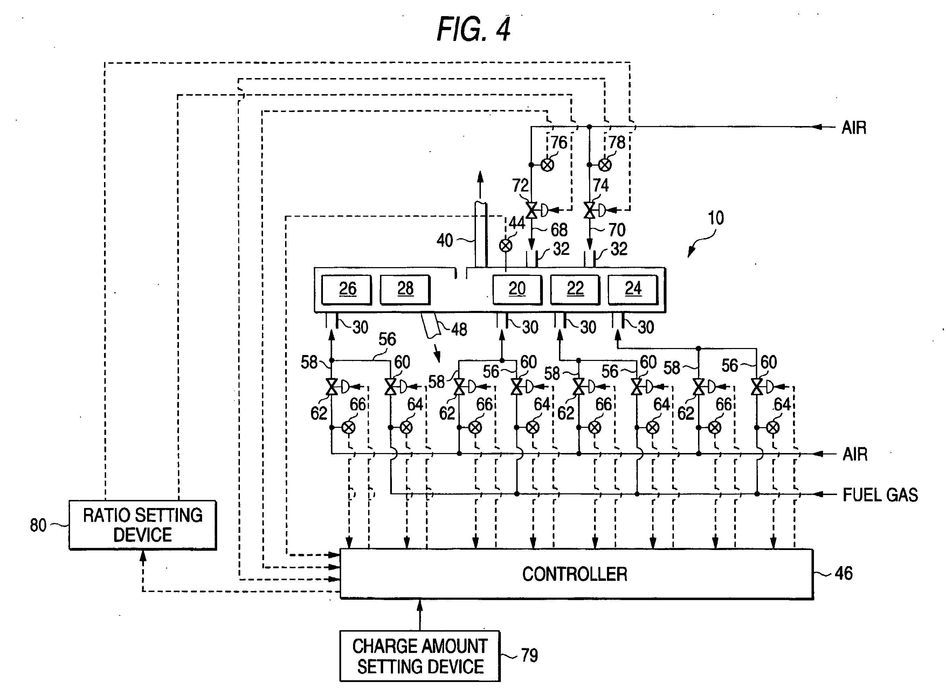

Fig. 4 is a view for explaining elementary parts of the introduced air controlling structure of the reducing furnace 10. This drawing shows connecting structures for controlling, and so the burner 30, air inlet 32 and the arrangement of the respective zones 20, 22 in the furnace are deformed for explaining convenience. In Fig. 4, the burners 30 equipped in the zones 20, 22 are connected to a fuel gas supply pipeline 56 and an air supply pipeline 58, respectively. These pipelines 56, 58 have, at upstream sides than a confluence thereof, valves 60, 62 to be controlled in open angle by a controller 46 for independently adjusting the flow rates of the fuel gas and the air per each of the zones 20, 22. At the positions of the upstream sides than the valves 60, 62, differential pressure type flow meters 64, 66 are provided for measuring the flow rates of the fuel gas and the air by use of, e.g., differential pressure, and signals showing the actual flow rates measured thereby are sent to the controller 46. The open angles of the valve are therefore adjusted such that the ratio of the actual flow rate measured by the flow meters 64, 66 agrees with a predetermined air/fuel ratio, and a pre-set furnace temperature is realized.

The air inlets 32 respectively equipped in the heating zone 20 and the intermediate zone 22 are respectively connected to, e.g., air supply pipelines 68, 70 having supply sources in common with the air supply pipelines 58 communicating with the burners 30. The respective air supply pipelines 68, 70 have valves 72, 74, the open angle of which is controlled by the controller 46, and differential pressure type flow meters 76, 78 for measuring the respective air flow rates by use of differential pressure, so that the air flow rates are thus independently measured and adjusted. The controller 46 has a charge amount setting device 79 by which the charge amount PL (t/h) of the pellet 34 is set, for example, manually. If the respective actual air flow rates, that is, the respective air supplying amounts to the heating zone 20 and the intermediate zone 22 are measured by the setting devices 76, 78, the measured flow rate signals are sent to the controller 46, and the open angles of the valves 72, 74 are adjusted such that the actual air flow rate meets the introduced-air-flow-rates determined in accordance with a later mentioned pellet charge amount PL. Between the controller 46 and the valves 72, 74, a ratio setting device 80 is located for setting ratios of the introduced-air-flow-rates to the pipelines 68, 70, so that the air rates to be supplied to the heating zone 20 and the intermediate zone 22 are adjusted following the set ratios.

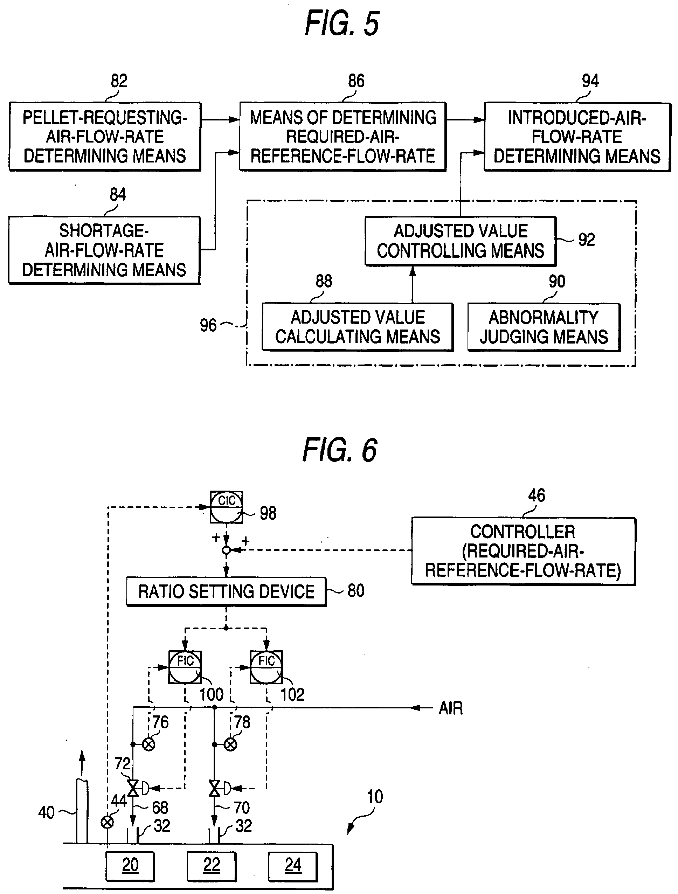

Fig. 5 is a functional block diagram for explaining the function of the controller 46. Means 82 for determining an air flow rate requested by pellet follows a charge amount PL(t/h) of the pellet 34 into the charge mouth 36 which (amount) is input by the setting device 79 or detected by such as a sensor, and determines an air flow rate PA($m^3$/h) requested by pellet requisite for heating the charged pellet 34 and oxidizing (complete combustion) all amount of a generated gas generated from reduction by use of, for example, an under stated formula (1)

$$PA = \alpha \times PL \qquad (1).$$

Herein, $\alpha$ is a coefficient determined per each of kinds of the pellet 34, that is, a value corresponding to an air volume necessary for the complete combustion of the gas generated when 1(t) reducing the pellet 34, for example, a value of around 538 ($m^3$/t) is used. Incidentally, the gaseous volume referred to in the invention is all values under a standard condition. The air flow rate PA requested by pellet is varied in response to kinds and the charging amount PL of the pellet 34, and for preventing an inflammable gas from staying in a waste gas and heightening safety in the whole of a metal oxide reducing system, the charging amount PL is set to be somewhat larger than an actual value, otherwise the coefficient $\alpha$ is set to be slightly larger than a theoretical value, whereby a larger value is determined than a value corresponding to the actual charge amount. For example, when the pellet charging amount PL is, e.g., manually determined, a value slightly larger than an actual value by, e.g., around 10(%), a value of around 20(t/h) is used.

The means 84 of determining the shortage air flow rate determines a shortage-air-flow-rate BA($m^3$/h) short/insufficient with respect to the theoretical air/fuel ratio in accordance with a fuel gas flow rate $\Sigma\ Gi(m^3/h)$ and an air flow rate $\Sigma Ai(m^3/h)$ measured by the differential pressure type flow meters 64, 66 by use of, for example, an under stated formula (2)

$$BA = \beta \times \Sigma Gi - \Sigma Ai \qquad (2).$$

Herein, $\beta$ is a coefficient determined per each of kinds of the fuel gas, that is, a value corresponding to an air volume necessary for the complete combustion of the fuel gas $1(m^3)$, for example, in a case of COG, a value of around 4.90 is used. By the way, $\Sigma Gi$ and $\Sigma Ai$ are the total flow rate of the fuel gas and the air supplied to the plural pieces of burners 30. Each of burners 30 is incidentally furnished with a pilot burner (not shown), and when the pilot burners are at combustion, the fuel gas flow rate and the air flow rate are also added to $\Sigma Gi$ and $\Sigma Ai$. The flow rates are very small in comparison with the flow rate into the burner 30 (main burner), and are negligible.

Means 86 of determining required-air-reference-flow-rate determines a required-air-reference-flow-rate to be introduced into the furnace for the complete combustion of the whole amount of the generated gas and the fuel gas from the air flow rate required by pellet PA and the shortage-air-flow-rate BA by use of, for example, an under stated formula (3)

$$RA = BA + PA \qquad (3).$$

As mentioned above, since the air flow rate requested by the pellet PA is a larger value than a value corresponding to the amount of actually charging the pellet, the required-air-reference-flow-rate RA is a slightly larger value than a value where oxygen in the introduced air is completely consumed and the oxygen density in the exhausted gas is 0(%). In other words, the required-air-reference-flow-rate RA is determined such that any inflammable gas does not remain in the exhausted gas, and oxygen exists at a small amount as, for example, around 2(%). The required-air-reference-flow-rate RA is a feed forward value in a later mentioned control of the introduced air.

An adjusted value calculating means 88 follows the oxygen density in the furnace near the flue 40 detected by the oxygen sensor 44, and an adjusted value A of the introduced air amount is calculated by use of an under feedback controlling formula (4) of PID actuation, such that the oxygen density coincides to a predetermined reference value of around 2(%) (that is, a deviation e between the measured value and an reference oxygen density is to be zero)

$$A = K_P\ e + K_I\ \textstyle\int edt + K_D\ de/dt \qquad (4).$$

In the formula (4), $K_P$, $K_I$ and $K_D$ are a proportion gain, an integral gain and a differential gain. The abnormality judging means 90 judges the abnormality of the oxygen sensor 44. This judgement judges the oxygen sensor 44 to be abnormal when detecting abnormalities of the sampling gas flow rate, the analyzing unit, the power source and breakdown of the signal lines. Also for regularly or irregularly carrying out adjustment or maintenance, the abnormality of the oxygen sensor 44 is judged in accordance with such as abnormality in the gas flow rate. An adjusted value controlling means 92 follows this abnormality judgement so as to output an adjusted value A as it is when the oxygen sensor 44 is normal, and output the adjusted value A controlled to be zero.

The required-air-reference-flow-rate RA and the adjusted value A are decided as mentioned above, and the means 94 of determining the introduced-air-flow-rate determines the air flow rate SA to be introduced into the furnace from the air inlet 32 by use of an under formula (5)

$$SA = RA + A \qquad (5).$$

The introduced-air-flow-rate SA is decided by adding the required-air-reference-flow-rate RA (feed forward output) obtained by the pellet charging amount and the air/fuel ratio of the burner 30 to the feedback output (the adjusted value A) of the oxygen density controlling system (the oxygen densitometer) comprising the oxygen sensor 44, the adjusted value calculating means 88, the abnormality judging means 90 and the adjusted value controlling means 92. To the above mentioned ratio setting device 80, the signal showing the introduced-air-flow-rate SA thus decided is transmitted. The oxygen density control system 96 may be installed within the controller 46, but may be separately installed so as to send the output signal only to the controller.

For reducing metal oxides pelletized with dusts by steel-making in the reducing furnace 10 structured as mentioned above, the hearth 52 is rotated at constant speed in the arrow P direction shown in Fig. 2, the burners 30 are supplied with the fuel gas and the air with the above mentioned air/fuel ratio, and burned to keep the respective zones in the furnace at predetermined temperatures, the air is introduced from the air inlet 32, and the pellets 34 formed with the pelletizer are charged from the charging mouth 36 of the reducing furnace 10 at fixed speed. This charging speed is fixed almost constantly, and prior to charging, a charging amount PL is input to the controller 46 by the charging amount setting device 79. The introduced-air-flow-rate SA is a value of adding the adjusted value to the required-air-reference-flow-rate RA which is given as the sum of the air flow rate required by pellet PA + the shortage-air-flow-rate BA. At beginning of starting the operation of the reducing furnace 10, since the feedback controlling flow rate (the adjusted value A) is zero, the introduced-air-flow-rate SA is set to be a value coinciding to the required-air-reference-flow-rate.

The charged pellet 34 is sent from the heating zone 20 toward the reducing zones 24, 26 according to rotation of the hearth 52, heated in the reducing atmosphere in this course, and reduced. At the same time as the reduction of the pellet 34, there appear the inflammable gas such as $H_2$ (hydrogen) or CO (carbon monoxide) derived from the reductants or the organic binder. The inflammable gas is instantly oxidized (the complete combustion) in the heating zone 20 and the intermediate zone 22 of the oxidizing atmosphere provided by introducing the air, and turns out an incombustible gas ($H_2O$, $CO_2$), and advances to the flue 40 as shown with the arrow $g_1$ (see Fig. 2). On the other hand, in the reducing zones 24, 26 keeping the reducing atmosphere, since the inflammable gas is generated as mentioned above and the air/fuel ratio is set to be a value less than 1, the fuel gas becomes incomplete combustion, and an inflammable gas derived therefrom also exist. Such an inflammable gas is scarcely burnt in the reducing zones 24, 26 but directed to the flue 40 as shown with the arrow $g_2$. When going into the heating zone 20 via the extraction zone 28, it reacts (combustion) with oxygen existing there and becomes an incombustible gas. The gas exhausted from the flue 40 is only the incombustible gas and the surplus air.

The air flow rate SA introduced into the furnace from the air inlet 32 is then a value set in accordance with the charging amount PL of the pellet 34. The value is a value where the gas generated in the furnace and an unburned fuel gas are all burnt and where a non-reacted oxygen remains by a very small amount as, for example 2(%). Namely, by setting at the beginning the introduced-air-flow-rate SA to be at the required-air-reference-flow-rate, the oxygen density about the flue 40 agrees with the reference value or is a very near value thereto, so that the control stability is heightened in comparison with the case of the feedback control only.

On the other hand, when the reducing furnace 10 works continuously, the actually generated gas amount is varied in response to the actual charging amount of the pellet 34 or the amounts of the reductants and the organic binder contained in the pellet 34. Accordingly, in the present embodiment, said theoretical air flow rate PA and in turn the required-air-reference-flow-rate RA are determined to be at a bit larger values in order that the oxygen (air) amount is not short/insufficient even if the generated gas amount becomes much. But when the generated gas amount becomes reversely less, if the introduced-air-flow-rate is maintained at RA (= BA + PA), the surplus oxygen amount is excessive. However, since the introduced-air-flow-rate SA is given at RA + A, the adjusted value A which is decided in accordance with the oxygen density measured by the oxygen sensor 44, is a negative value working to decrease SA, and thus it is controlled that the surplus oxygen amount is excessive by the feedback control.

As mentioned above, when the oxygen sensor 44 is normal, as the introduced-air-flow-rate SA is adjusted by the adjusting value A to decrease the required-air-reference-flow-rate having been determined to be more, the exhausted gas is maintained at the reference oxygen density. However, when abnormality is detected in the oxygen sensor 44 because of trouble, adjustment or maintenance, the adjusted value A is controlled to be zero as mentioned above. Therefore, following the formula (5), the introduced-air-flow-rate SA is caused to agree with the required-air-reference-flow-rate RA, and as a result, the oxygen density in the exhausted gas is maintained at the higher value so as to secure the safety.

In sum, in this embodiment, the introduced-air-flow-rate is controlled by the feedback - feed forward composite control where the required-air-reference-flow-rate RA theoretically requested by use of the charging amount of the pellet 34 is the feed forward control value, and the adjusted value A given from the oxygen density controlling system is the feedback control value. That is, the required-air-reference-flow-rate RA is added with the adjusted value A calculated in accordance with the deviation between the measured oxygen density and the reference value, i.e., the air flow rate to be increased or decreased, thereby to determine the introduced-air-flow-rate SA. Accordingly, the introduced-air-flow-rate is controlled where the required-air-reference-flow-rate RA is the feed forward value. Thus, if the charging amount of the pellet 34 is varied, since the introduced-air-flow-rate SA is determined by the adjusted value A and the required-air-reference-flow-rate RA varied in response thereto, the control response can be quickened without decrease of the stability in comparison with the case where the introduced-air-flow-rate SA is decided only by the feedback control using the measured value of the oxygen density analyzer. Further, at the abnormality of the oxygen sensor 44, as the adjusted value A is controlled to be zero, the required-air-reference-flow-rate RA is decided of itself as the introduced-air-flow-rate SA. Accordingly, it is possible to secure the air flow rate minimum necessary for the heat efficiency and the safety even under the condition of the feedback control being not available, so that the furnace can be continuously operated without interruption to heighten the productivity.

In this embodiment, the pellet 34 is heated by the burners 30, and the required-air-reference-flow-rate RA being the feed forward value is given by the sum of the air flow rate requested by the pellet PA + the shortage-air-flow-rate BA of the burner 30, and therefore the shortage-air-flow-rate BA short/insufficient for the complete combustion of the fuel gas is considered when deciding the required-air-reference-flow-rate RA and in turn the introduced-air-flow-rate SA. In other words, the required-air-reference-flow-rate RA (= the air flow rate requested by the pellet PA + the shortage-air-flow-rate BA) is employed as the feed forward value. The consumption of air by the combustion of fuel is compensated by increasing the air flow rate introduced in the heating zone 20 and the intermediate zone 22, and so it is possible to make the complete combustion of the inflammable gas in the furnace chamber more secure and exhaust it.

In the embodiment, as the air flow rate requested by the pellet PA larger by around 10(%) than the value corresponding to the actually charging amount is employed for deciding the introduced-air-flow-rate SA, the oxygen density in the heating zone 20 and the intermediate zone 22 is increased above a value necessary for the complete combustion of reminders of the gas generated from the pellet 34 and the fuel gas. Thus, also when the adjusted value A is controlled to be zero by the adjusted value controlling means 92, it is possible to secure the air flow rate enough for the complete combustion of the inflammable gas in the furnace chamber.

In the embodiment, with respect to the reducing furnace 10, the furnace chamber is doughnut-shaped, and the pellets 34 are laid on the doughnut-shaped hearth 52 rotating around the axis of the furnace, and transferred peripherally within the furnace chamber. As the hearth 52 is of no interruption in the transferring direction, it is unnecessary to control the charging timing of the pellet 34 in response to the position of the hearth 52, and the operating control is made easy. The whole of the hearth 52 is located within the furnace to always transfer the pellets 34, and there is no uselessness of installing a return path of the hearth in comparison with the case of using the longitudinal furnace chamber for linearly sending the pellets 34, and a metal obtained by charging and reducing the pellets 34 can be advantageously recovered at an adjacent place.

In the above mentioned embodiment, the explanation has been made to a digital control by the controller 46 of the whole control of the introduced-air-flow-rate, but other parts excepting determination of the required-air-reference-flow-rate RA among the introduced-air-flow-rate controls may depend on an analog control by use of a densitometer 98 and the flow rate adjusters 100, 102 as shown in Fig. 6. In the same, the densitometer 98 outputs control currents in response to deviation between the density detected by the oxygen sensor 44 and a predetermined density, so that both densities coincide to. This output current corresponds to the above mentioned adjusted value A, and is added with an output current corresponding to the required-air-reference-flow-rate RA determined by the controller 46 as mentioned above, and sent to the ratio setting device 80. Further the densitomiter 98 has a trouble judging circuit for judging abnormality, e.g., breakdown of the oxygen sensor 44 in accordance with the judgement standard. The densitometer 98 serves to decrease the required-air-reference-flow-rate RA having been set to be more at normality of the sensor 44 so as to obtain a proper introduced-air-flow-rate SA, but at abnormality of the sensor 44, the output current value, i.e., the adjusted value is controlled to be zero to heighten the oxygen density in the exhausted air.

The ratio setting device 80 is provided with an air flow rate distribution to be previously introduced into the heating zone 20 and the intermediate zone 22, and the input control current is supplied to the flow rate adjusters 100, 102 in response to the distribution thereof. The flow rate adjusters 100, 102 output the control currents in response to the deviation between the respective air flow rates of the air supply pipelines 68, 70 detected by the differential pressure type flow meters 76, 78 and the air flow rate determined by the ratio setting device 80, so that both air flow rate coincide to. When the valves 72, 74 are opened and closed by the control current, the oxygen density around the flue is maintained at a proper value. Incidentally, Fig. 6 only shows the analog control of the introduced air control, but the air/fuel ratio of the burner 30 may be also analog-controlled.

One embodiment of the invention has been explained with reference to the attached drawings, and the invention is practiced in another embodiment.

For example, in the embodiment, the explanation has been made to the application of the invention to the rotating hearth equipped with the doughnut-shaped furnace chamber where the doughnut-shaped hearth 52 is rotated therein, and the invention is also similarly applied to a furnace of a rotary bed where the hearth 52 is divided into plural segments to form a doughnut shape as a whole, or to a furnace of a moving bed of such a type where a hearth having a size sufficiently smaller than a length size of a longitudinal furnace chamber moves from an entrance to an exit furnished at both ends of the furnace.

Further, in the embodiment, the required-air-reference-flow-rate RA being the feed forward value was determined by the sum of the air flow rate required by the pellet PA decided from the charging amount PL of the pellet 34 + the shortage-air-flow-rate BA with respect to the theoretical air/fuel ratio of the air flow rate supplied from the burners 30 (PA + BA). If the shortage-air-flow-rate BA is kept at a sufficiently small value with respect to the air flow rate required by the pellet PA, the air flow rate requested by the pellet is used of itself as the feed forward value for deciding the introduced-air-flow-rate SA.

In the embodiment, the charging amount PL of the pellet 34 was determined to be at the larger value than the actually charging amount, otherwise the coefficient $\alpha$ demanded in response to kinds of the pellets 34 was determined to be at the larger value than the theoretical value, whereby the air flow rate requested by the pellet PA was determined to be a value larger than a value to the actually charging amount. When a dispersion of the inflammable gas amount generated from the pellets 34 is enough small, the charging amount PL is set to be the actually charging amount, otherwise a charging amount detected by such as a mass sensor may be used as it is to the control.

In the embodiment, the abnormality of the oxygen sensor 44 was judged in accordance with the abnormalities of the sampling gas flow rate, the analyzing unit, the power source and breakdown of the signal lines. It may be judged by the measured values of the varying rates of the measured values.

In addition, the number of divided zones of the furnace chamber in the reducing furnace 10, temperature and atmosphere (for example, the air/fuel ratio of the burner 30) of the respective zones 20, 22 are appropriately changed in response to qualities of the pellets 34 to be processed or the structures of the furnace chamber. For example, the furnace chambers may be respectively composed only with the heating zone and the reducing zone.

In the embodiment, the flue 40 was installed at one place of the heating zone 20, but may be installed at a plurality of places, or at the heating zone 20 and the intermediate zone 22, respectively. When the flues 40 are installed at the plural places, it is desirable to measure the oxygen density in the furnace chambers near the flues and practice the feedback control.

In the embodiment, the oxygen density near the flue 40 was controlled to be around 2(%), and this value does not take any danger of explosion of the inflammable gas exhausted from the flue 40 and may be appropriately set within a range of enough obtaining the increasing effect of the heating efficiency by the combustion of the inflammable gas in the furnace chamber.

Not exemplifying one by one, the invention can be variously modified in a range not getting out of the subject matter of the invention.

while there has been described in connection with the preferred embodiment of the invention, it will be obvious to those skilled in the art that various changes and modifications may be made therein without departing from the invention, and it is aimed, therefore, to cover in the appended claim all such changes and modifications as fall within the true spirit and scope of the invention.

Summarised, the present invention generally provides an apparatus and a method for controlling an air to be introduced into a reducing furnace. In particular, an introduced-air-flow-rate SA is determined by adding an adjusted value A given from an oxygen density controlling system to a required-air-reference-flow-rate RA demanded by the charging amount of pellets. The introduced-air-flow-rate is controlled where the required-air-reference-flow-rate RA is the feed forward value. Thus, if the charging amount of the pellet is varied, since the introduced-air-flow-rate SA is determined by the adjusted value A and the required-air-reference-flow-rate RA varied in response thereto, the control response can be quickened without decrease of the stability. Further, at the abnormality of the oxygen sensor, as the adjusted value A is controlled to be zero, the required-air-reference-flow-rate RA is decided of itself as the introduced-air-flow-rate SA.

**Claims**

1. An apparatus for controlling an introduced air in a metal oxide reducing furnace (10),

> wherein said metal oxide reducing furnace (10) heats processed materials containing metal oxides and reducing materials (34) under a reducing atmosphere while transferring from a starting position (36) said processed materials (34) in one direction within a furnace chamber, to thereby reduce metal oxides for obtaining a metal from said processed materials,

> wherein said metal oxide reducing furnace introduces air into a predetermined position of the furnace chamber so as to cause complete combustion of an inflammable gas staying in the furnace chamber, and then said metal oxide reducing furnace discharges the thus completely combusted gas from a gas discharging position (40) in adjacent to the starting position,

> wherein said metal oxide reducing furnace measures an oxygen density within the furnace chamber by use of an oxygen densitometer (44) that is disposed in the vicinity of the gas discharging position (40), and

> wherein said metal oxide reducing furnace controls an introduced-air-flow-rate of air introduced into the predetermined position by use of an adjusted value that is calculated in accordance with deviation between the measured value of the oxygen density and an reference oxygen density,

> said controlling apparatus comprising:

>> means (82) for determining, in accordance with the amount of the processed materials that is charged into the furnace, a processed-material-requesting-air-flow-rate that is requested to take a complete combustion of gas which is generated from the processed materials,

>> abnormality judging means (90) for judging abnormality of the oxygen densitometer,

>> means (82) for controlling the adjusted value to be at zero when the abnormality of the oxygen densitometer is judged by the abnormality judging means, and

means (94) for determining the introduced-air-flow-rate by adding processed-materials-requesting-air-flow-rate and the adjusted value.

2. An apparatus for controlling an introduced air in a metal oxide reducing furnace (10), wherein said metal oxide reducing furnace comprises, a furnace chamber into which the processed materials (34) containing metal oxides and reducing materials are charged, a hearth (52) disposed within said furnace chamber for transferring the processed materials within said furnace chamber, a heater (30) disposed at said furnace heating the processed materials, an air introducing member (32) disposed at said furnace, a fuel gas introducing member disposed at said furnace, and an oxygen densitometer (44) measuring an oxygen density within the furnace chamber,
said controlling apparatus comprising:

means (82) for determining, in accordance with the amount of the processed materials that are charged into the furnace chamber, a processed-materials-requesting-air-flowrate that is requested to take a complete combustion of gas which is generated from the processed materials;

means (94) for determining, an introduced-air-flow-rate of an air introduced by the air introducing member, by adding the processed-materials-requesting-air-flow-rate and an adjusted value that is calculated in accordance with deviation between the measured value of oxygen density and an reference oxygen density;

abnormality judging means (90) for judging abnormality of the oxygen densitometer; and

means (92) for controlling the adjusted value to be at zero when the abnormality of the oxygen densitometer is judged by the abnormality judging means.

3. The introduced air controlling apparatus according to claim 1 or 2, further comprising:

means (84) for determining, in accordance with flow rates of air and fuel gas that are supplied into the furnace chamber for heating the processed materials, a shortage-air-flow-rate insufficient with respect to the complete combustion of the fuel gas,

wherein said means of determining the introduced-air-flow-rate determines the introduced-air-flow-rate by adding the processed-materials-requesting-air-flow-rate, the shortage-air-flow-rate and the adjusted value.

4. The introduced air controlling apparatus according to one of claims 1 to 3, wherein said processed-materials-requesting-flow-rate determining means determines, as the processed-materials-requesting-air-flow-rate, a value larger by a predetermined value than a value that is determined in correspondence to the amount of the processed materials that have been actually charged.

5. The introduced air controlling apparatus according to one of claims 1 to 4, wherein the furnace chamber is formed into a doughnut shape, and the processed materials is laid on a doughnut shaped hearth (52) and then rotated around the axis thereof so as to be transferred in a circumferential direction of the furnace chamber.

*FIG. 1*

EXHAUST

CONTROLLER → TO EACH CONTROL VALVE

EXTRACT

EP 1 186 675 A1

# FIG. 2

# FIG. 3

## FIG. 4

RATIO SETTING DEVICE — 80

CHARGE AMOUNT SETTING DEVICE — 79

CONTROLLER — 46

AIR

AIR

FUEL GAS

EP 1 186 675 A1

14

## FIG. 5

```
        82                              86                              94
┌─────────────────────┐      ┌─────────────────────┐      ┌─────────────────────┐
│ PELLET-REQUESTING-   │      │ MEANS OF DETERMINING │      │   INTRODUCED-AIR-    │
│  AIR-FLOW-RATE       │ ───▶ │   REQUIRED-AIR-      │ ───▶ │    FLOW-RATE         │
│ DETERMINING MEANS    │      │ REFERENCE-FLOW-RATE  │      │ DETERMINING MEANS    │
└─────────────────────┘      └─────────────────────┘      └─────────────────────┘

        84
┌─────────────────────┐
│     SHORTAGE-        │      ┌──────────────────────────────────────────────────┐
│  AIR-FLOW-RATE       │      │              ┌──────────────────┐                 │
│ DETERMINING MEANS    │      │              │ ADJUSTED VALUE   │─── 92           │
└─────────────────────┘      │              │ CONTROLLING MEANS│                 │
                             │              └──────────────────┘                 │
                             │       88              ▲          90               │
                        96 ──┤  ┌──────────────┐  ┌──────────────┐               │
                             │  │ ADJUSTED VALUE│  │ ABNORMALITY  │               │
                             │  │ CALCULATING   │  │ JUDGING MEANS│               │
                             │  │ MEANS         │  │              │               │
                             │  └──────────────┘  └──────────────┘               │
                             └──────────────────────────────────────────────────┘
```

## FIG. 6

**European Patent Office**

**EUROPEAN SEARCH REPORT**

Application Number

EP 01 12 1452

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | PATENT ABSTRACTS OF JAPAN vol. 014, no. 466 (C-0768), 11 October 1990 (1990-10-11) & JP 02 190412 A (NIPPON STEEL CORP), 26 July 1990 (1990-07-26) * abstract * | | C21B13/10 C21B13/00 |
| A | PATENT ABSTRACTS OF JAPAN vol. 004, no. 174 (C-033), 2 December 1980 (1980-12-02) & JP 55 113812 A (KOBE STEEL LTD), 2 September 1980 (1980-09-02) * abstract * | | |
| A | PATENT ABSTRACTS OF JAPAN vol. 013, no. 491 (C-650), 7 November 1989 (1989-11-07) & JP 01 195218 A (NIPPON STEEL CORP), 7 August 1989 (1989-08-07) * abstract * | | |
| A | PATENT ABSTRACTS OF JAPAN vol. 013, no. 491 (C-650), 7 November 1989 (1989-11-07) & JP 01 195217 A (NIPPON STEEL CORP), 7 August 1989 (1989-08-07) * abstract * | | **TECHNICAL FIELDS SEARCHED (Int.Cl.7)** C21B |
| A,P | PATENT ABSTRACTS OF JAPAN vol. 2000, no. 21, 3 August 2001 (2001-08-03) & JP 2001 115204 A (MITSUBISHI HEAVY IND LTD), 24 April 2001 (2001-04-24) * abstract * | 1 | |

The present search report has been drawn up for all claims

| Place of search | Date of completion of the search | Examiner |
|---|---|---|
| THE HAGUE | 18 December 2001 | Elsen, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on. or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.** EP 01 12 1452

This annex lists the patent family members relating to the patent documents cited in the above-mentioned European search report.
The members are as contained in the European Patent Office EDP file on
The European Patent Office is in no way liable for these particulars which are merely given for the purpose of information.

18-12-2001

| Patent document cited in search report | | Publication date | Patent family member(s) | | Publication date |
|---|---|---|---|---|---|
| JP 02190412 | A | 26-07-1990 | JP | 2684209 B2 | 03-12-1997 |
| JP 55113812 | A | 02-09-1980 | JP | 1317183 C | 15-05-1986 |
| | | | JP | 60039723 B | 07-09-1985 |
| JP 01195218 | A | 07-08-1989 | NONE | | |
| JP 01195217 | A | 07-08-1989 | JP | 2067898 C | 10-07-1996 |
| | | | JP | 7098968 B | 25-10-1995 |
| JP 2001115204 | A | 24-04-2001 | NONE | | |

EPO FORM P0459

For more details about this annex : see Official Journal of the European Patent Office, No. 12/82